Europäisches Patentamt

European Patent Office

Office européen des brevets

(19)

(11) Veröffentlichungsnummer: **0 237 942**
**B1**

(12) **EUROPÄISCHE PATENTSCHRIFT**

(45) Veröffentlichungstag der Patentschrift:
25.10.89

(51) Int. Cl.⁴: **F17C 9/02,** F01K 17/04,
F02G 5/02

(21) Anmeldenummer: 87103516.8

(22) Anmeldetag: 11.03.87

(54) Verfahren und Anlage zur Verdampfung von verflüssigten Kohlenwasserstoffen.

(30) Priorität: 20.03.86 CH 1115/86

(43) Veröffentlichungstag der Anmeldung:
23.09.87 Patentblatt 87/39

(45) Bekanntmachung des Hinweises auf die Patenterteilung:
25.10.89 Patentblatt 89/43

(84) Benannte Vertragsstaaten:
BE DE ES FR GB IT NL SE

(56) Entgegenhaltungen:
DE-B- 1 275 905
FR-A- 1 158 766
US-A- 3 771 260
US-A- 3 785 620

CHEMICAL ABSTRACTS, Band 89, Nr. 20,
November 1978, Seite 141, Zusammenfassung
Nr. 165948r, Columbus, Ohio, US; &
JP-A-77 138 503 (HITACHI SHIPBUILDING AND
ENGINEERING CO., LTD) 18-11-1977

(73) Patentinhaber: GEBRÜDER SULZER
AKTIENGESELLSCHAFT, Zürcherstrasse 9,
CH-8401 Winterthur(CH)

(72) Erfinder: Mandrin, Charles, Dr., Im Laubegg 7,
CH-8406 Winterthur(CH)

(74) Vertreter: Dipl.-Ing. H. Marsch Dipl.-Ing. K. Sparing
Dipl.-Phys.Dr. W.H. Röhl Patentanwälte,
Rethelstrasse 123, D-4000 Düsseldorf 1(DE)

## Beschreibung

Die Erfindung betrifft ein Verfahren zur Verdampfung von verflüssigten Kohlenwasserstoffen gemäss Oberbegriff von Anspruch 1 und eine Anlage zur Durchführung des Verfahrens.

Unter verflüssigten Kohlenwasserstoffen sollen im Sinne der Erfindung insbesondere Erdgas, aber auch Propan, Butan und Mischungen von leichten Kohlenwasserstoffen (in der englischen Fachliteratur mit LPG (liquid petroleum gas) bezeichnet) verstanden werden.

Aus der US-A 3 771 260 ist ein Verfahren zur Verdampfung von verflüssigten Kohlenwasserstoffen bekannt, bei dem ein Kohlenwasserstoff-Strom durch indirekten Wärmeaustausch in einem als Brennkammer mit einem Brenner ausgebildeten Erhitzer erwärmt und sodann in direkten Wärmeaustausch mit dem verflüssigten Kohlenwasserstoff gebracht wird, wobei dieser verdampft.

In der bekannten Anlage wird bei Betrieb ständig zusätzlich ein gasförmiger Kohlenwasserstoff-Strom als Hilfsgas benötigt, welcher nach seiner Erwärmung in einer Brennkammer dazu dient, durch direkten Wärmeaustausch mit einem verflüssigten Kohlenwasserstoff-Strom, diesen zu verdampfen. Das hierbei gebildete, aus dampfförmigem Kohlenwasserstoff bestehende Produkt, geht somit von einem Hilfsgas plus verflüssigtem Gas als Ausgangsmedien aus.

Zudem ist ein aus Brenner und Brennkammer bestehender Erhitzer aus Sicherheitsgründen, insbesondere auf Tankschiffen, nicht tolerierbar.

Daneben ist es bekannt, zur Verdampfung von auf Tankern transportiertem Flüssig-Erdgas als Wärmequelle Meerwasser zu verwenden.

Hierbei rieselt Meerwasser auf der Oberfläche von Rippenrohren von, von Flüssig-Erdgas durchströmten Wärmeaustauschern herunter, wodurch das Flüssig-Erdgas verdampft. Dieses Verfahren weist gravierende Nachteile auf, die insbesondere darin bestehen, daß die benötigte Wassermenge sehr groß ist, weil das Meerwasser nur auf zirka 4°C gekühlt werden kann, daß deshalb die Anlage eine große Dimensionierung erfordert, was auf Schiffen nur unter erschwerten Bedingungen realisierbar ist, sowie, daß die Anlage wegen der Korrosionsgefahr aus speziellen teuren Werkstoffen hergestellt sein muss.

Weiterhin sind auch sogenannte Tauchbrenner zur Verdampfung von Flüssig-Erdgas bekannt. Derartige Vorrichtungen bestehen im wesentlichen aus einem offenen Wasserbehälter und einem Kamin, wobei im Kamin ein Gasbrenner und ein Ventilator sowie im Wasserbehälter eine Kühlschlange angeordnet ist, in welcher Flüssig-Erdgas verdampft.

Auch eine derartige Anlage weist wesentliche Nachteile auf, die insbesondere darin bestehen, daß sie erhebliche Abmessungen, insbesondere wegen des erforderlichen Wasserniveaus erfordert und außerdem aus einem korrosionsbeständigen Material, wie rostfreiem Stahl hergestellt sein muß, wegen der hohen Korrosivität des mit Kohlendioxyd gesättigten Wassers. Außerdem sollten derartige Anlagen nach Möglichkeit keine offenen Flammen erfordern. Bei Tauchbrennern wäre ein Flammenrückschlag durch den Ventilator bei einem Stromausfall möglich.

Der Erfindung liegt die Aufgabe zugrunde, ein Verfahren zu ermöglichen, welches eine gegenüber dem Stand der Technik wesentlich wirtschaftlichere Verdampfung von verflüssigten Kohlenwasserstoffen, insbesondere auf mit Dampf angetriebenen Tankschiffen ermöglicht, wobei weiterhin das Verfahren in einer möglichst kompakten, nicht explosionsgefährdeten Anlage durchgeführt werden kann.

Diese Aufgabe wird gemäß der Erfindung mit den im Kennzeichen des Anspruchs 1 angegebenen Merkmalen gelöst.

Eine Anlage zur Durchführung des Verfahrens ist erfindungsgemäss gekennzeichnet durch die im Anspruch 12 angegebenen Massnahmen.

Vorteilhafte Ausführungsformen wie Weiterbildungen der Erfindung sind in den Ansprüchen 2 bis 11 und 13 aufgeführt.

Die Erfindung eignet sich zwar insbesondere für Dampfschiffe, kann jedoch vorteilhaft auch bei Tankern mit Dieselmotorantrieb bzw. in Festlandanlagen angewendet werden.

Die Erfindung ermöglicht es, auf wirtschaftliche Weise eine relativ kleine, leicht demontierbare und nicht etwa durch einen Brenner explosionsgefährdete Verdampfungsanlage, insbesondere auf einem Tankschiff, das auf Hochsee verankert ist, zu betreiben. Der Bau eines gassicheren Hafens wäre äusserst unwirtschaftlich.

Die Erfindung ermöglicht eine Montage der Verdampfungsanlage oberhalb der Flüssiggasspeicher, so dass diese zu Revisionszwecken leicht zugänglich sind. Für den Normalbetrieb wird kein Wasser benötigt.

Bei Anwendung der Erfindung auf mit Dampf betriebene Tankschiffe fällt als ein wesentlicher Vorteil ins Gewicht, dass Wärmequellen in Form der sowieso vorhandenen Dampfkessel zur Verfügung stehen, da bei Betrieb der Verdampfungsanlage die Antriebsturbinen ausser Betrieb sind und Dampf nur für Bordgeräte, wie z.B. Generatoren für die Stromversorgung, Pumpenantriebe und dergl. verfügbar sein muss.

Nachfolgend wird anhand von Ausführungsbeispielen die Erfindung erläutert.

In Fig. I ist ein Fliessschema einer erfindungsgemässen Anlage für ein Dampfschiff dargestellt.

Die Fig. 2 zeigt ein Fliessschema einer mehrstufigen Anlage, die Fig. 3 und 4 variante Ausführungsformen,
Fig. 5 eine Anlage für ein Pipeline-System und
Fig. 6 eine gegenüber Fig. 4 modifizierte Anlage.

Die in Fig. I dargestellte Verdampfungsanlage weist einen, von einer Dampfturbine I angetriebenen Kompressor 2, einen Wärmeaustauscher 3 und einen Behälter 4 mit einer statischen Mischeinrichtung 5 auf, wie sie beispielsweise in den schweizerischen Patentschriften 537 208, 547 l20, 642 564 und in der EP-PS 70 9l7 beschrieben sind. Die Anlageteile werden durch ein Leitungssystem 7 bis l2 und 26 miteinander verbunden.

Im Betrieb wird Flüssig-Erdgas über Leitung 7 in den Behälter 4 durch Düsen 6 eingesprüht und mit aus der Leitung 26 herangeführtem erwärmten Erdgasdampf in Kontakt gebracht, in der statischen Mischeinrichtung 5 gemischt und hierbei verdampft. Der entstehende Dampf wird von dem Kompressor 2 angesaugt und verdichtet. Als Produkt kann unverdichtetes Erdgas oder verdichtetes Erdgas durch die Leitung 8 bzw. 9 entnommen werden.

Durch die Leitung l0 wird der Dampfturbine I, insbesondere eine Gegendruckturbine Hochdruckdampf zugeführt und entspannt. Der Dampf strömt durch Leitung ll in den Wärmeaustauscher 3 und kondensiert durch Wärmeaustausch mit dem verdichteten Erdgas. Das Kondensat verlässt den Wärmeaustauscher durch eine Leitung l2.

Der Wärmeaustauscher 3 könnte noch zusätzlich zu der Leitung ll aus anderen Dampfquellen gespeist werden, z.B. aus einer anderen, nicht dargestellten Gegendruckturbine, die eine nicht dargestellte Flüssiggaspumpe antreibt. Die Aufgabe dieser Flüssiggaspumpe könnte darin bestehen, dass die Pumpe z.B. aus einem nicht dargestellten Lager Flüssiggas in den Behälter 4 durch die Leitung 7 fördert.

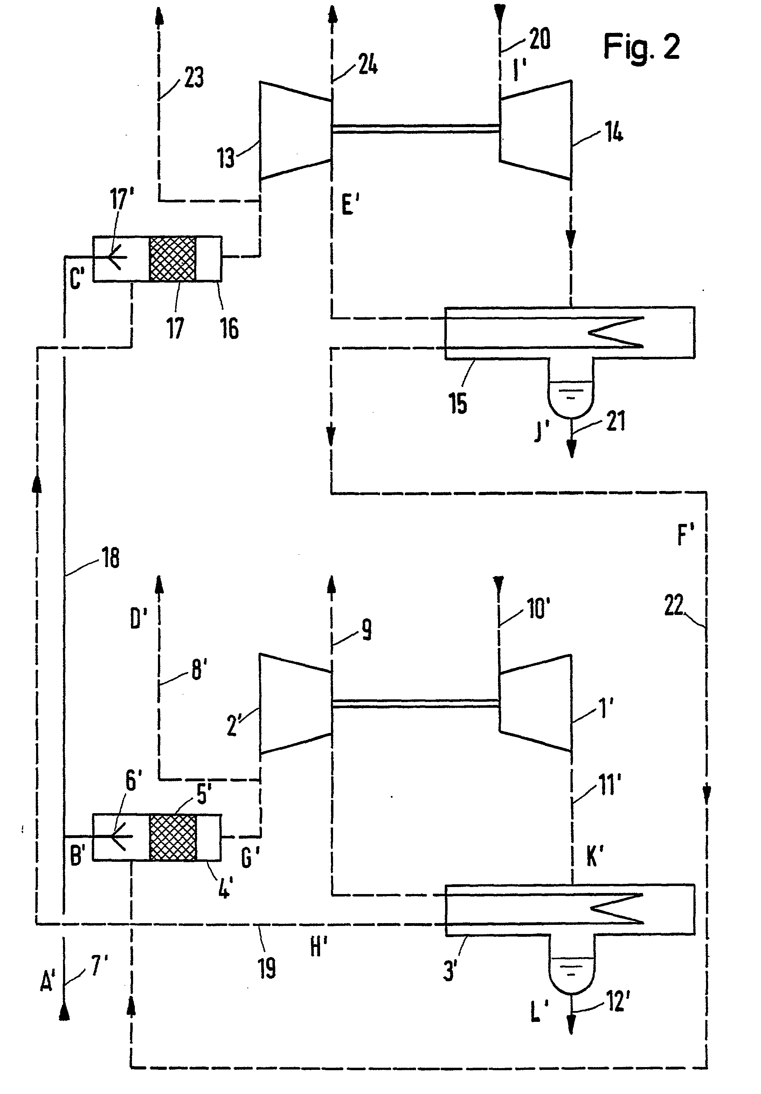

Fig. 2 zeigt eine Ausführungsform einer Verdampfungsanlage mit zwei Stufen. Die mit Fig. I übereinstimmenden Anlageteile sind mit den gleichen Bezugsziffern bezeichnet und zusätzlich mit einem Apostroph versehen.

Im vorliegenden Fall weist jede Stufe einen Kompressor 2' bzw. l3, eine Dampfturbine l' bzw. l4, Wärmeaustauscher 3' bzw. l5 und Behälter 4' bzw. l6 auf. In letzteren sind Düsen 6' bzw. l7' für das Flüssig-Erdgas und statische Mischeinrichtungen 5' bzw. l7 angeordnet.

Im Betrieb wird Flüssig-Erdgas durch die Leitungen 7' und l8 in die Behälter 4' und l6 eingesprüht. Das in der ersten Stufe im Wärmeaustauscher 3' erwärmte Erdgas wird durch eine Leitung l9 in den Behälter l6 eingeleitet und darin mit Flüssig-Erdgas zusammengebracht, wobei letzteres verdampft. Der im Kompressor l3 verdichtete Erdgasdampf wird im Wärmeaustauscher l5 durch Wärmeaustausch von in der Dampfturbine l4 entspannten Dampf erwärmt. Die Dampfturbine l4 erhält Hochdruckdampf durch die Leitung 20. Das beim Wärmeaustausch entstehende Kondensat wird durch eine Leitung 2l aus der Anlage herausgeführt. Der erwärmte Erdgasdampf wird aus der zweiten Stufe durch eine Leitung 22 entnommen und in den Behälter 4' der ersten Stufe eingeleitet.

Produkt kann jeder Stufe der Anlage verdichtet oder nicht verdichtet durch die Leitungen 8', 9' bzw. 23, 24 entnommen werden. Es ist auch möglich, nur aus einer Stufe Produkt zu entnehmen.

In der Zeichnung ist die Anlage nur zweistufig dargestellt. Selbstverständlich kann die Anlage auch mehrstufig ausgebildet sein. Ebenso ist es möglich, die Kombination Kompressor-Dampfturbine nicht in allen Stufen vorzusehen, sondern in einer oder in mehreren Stufen fremde Wärmequellen zur Erwärmung des Erdgasdampfes heranzuziehen.

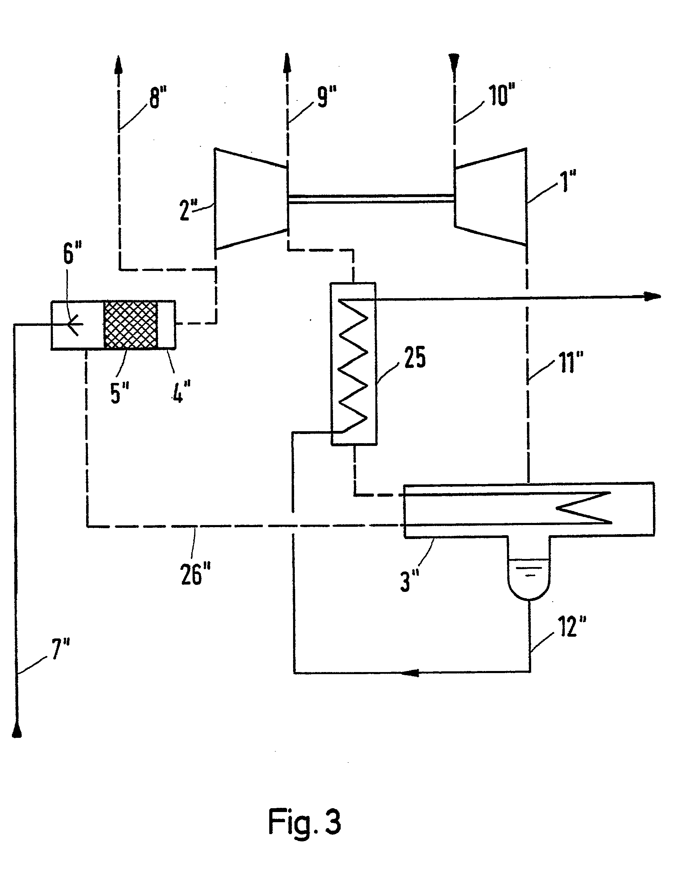

In Fig. 3 ist eine Anlage dargestellt, deren mit Fig. I übereinstimmende Anlagenteile mit den gleichen Bezugsziffern bezeichnet und mit "''" versehen sind.

Im vorliegenden Fall ist die Anlage durch einen Wärmeaustauscher 25 erweitert, in welchem die Abwärme des Kondensates des Wärmeaustauschers 3" dadurch ausgenutzt wird, dass es in Wärmeaustausch mit dem Wärmeaustauscher 3" zugeführten verdichteten Erdgasdampf gebracht wird.

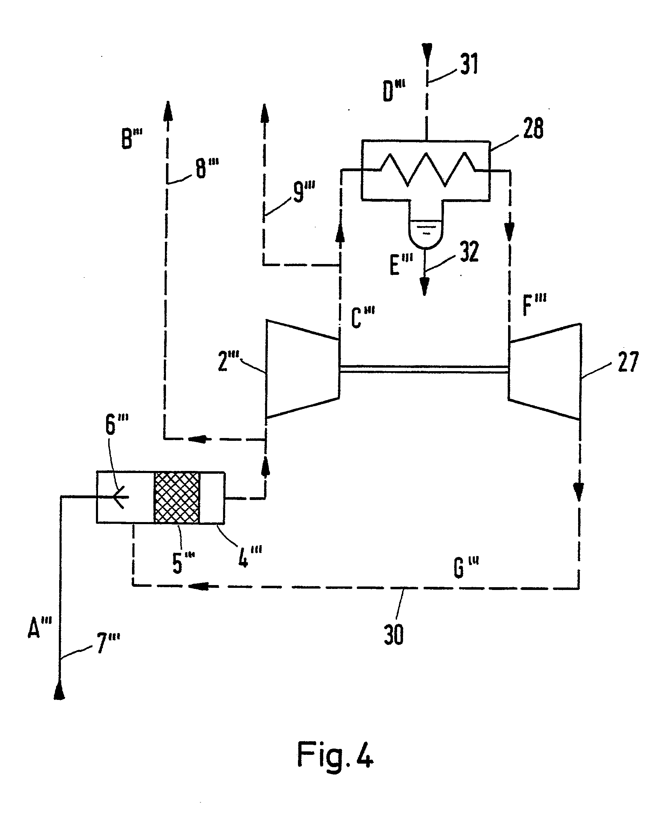

Fig. 4 zeigt eine Verdampfungsanlage, die im wesentlichen einen Kompressor 2"', eine von Erdgas angetriebene Turbine 27, einen von einer fremden Wärmequelle, insbesondere von der Dampfkraftanlage eines Schiffes, gespeisten Wärmeaustauscher 28 und einen Behälter 4"' aufweist, sowie ein die Anlagenelemente verbindendes Leitungssystem 29 bis 32. Die mit Fig. I übereinstimmenden Anlagenelemente und Leitungen sind mit den gleichen Bezugsziffern bezeichnet, nur mit "'''" versehen.

Im Betrieb wird Flüssig-Erdgas durch Leitung 7"' in den Wärmeaustauscher 4"' eingesprüht und mit, durch Leitung 30 herangeführtem, entspannten Erdgas in Wärmeaustausch gebracht und hierbei verdampft. Das im Kompressor 2"' verdichtete Erdgas wird vor seiner Entspannung in der Turbine 27 im Wärmeaustauscher 28 durch Heizdampf, der beispielsweise aus der Dampfkraftanlage eines Tank-Schiffes stammt und der durch Leitung 3l in den Wärmeaustauscher eingespeist wird, erwärmt. Das Kondensat des Heizdampfes wird durch eine Leitung 32 aus der Dampfkraftanlage herausgeführt.

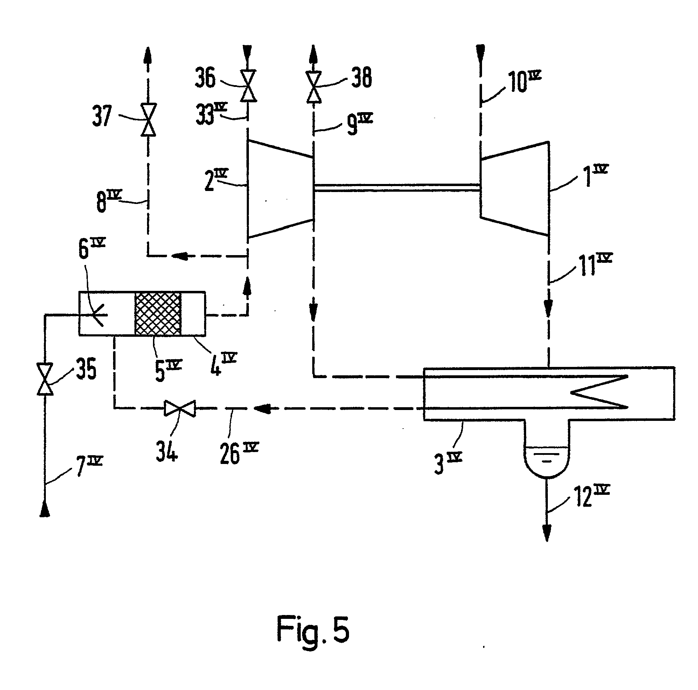

In Fig. 5 ist eine Anlage dargestellt, deren Anlagenelemente im wesentlichen mit denjenigen der Fig. I übereinstimmen und daher mit den gleichen Bezugsziffern bezeichnet sind und zur Unterscheidung mit "IV" versehen sind.

Im vorliegenden Ausführungsbeispiel soll die Verdampfungsanlage sich auf dem Festland befinden und in ein Pipeline-System integriert sein. Es ist vorteilhaft, Erdgas-Netze mit dezentralisierten Flüssig-Erdgasspeichern zu unterstützen, um lokalen Spitzenbedarf im Falle grosser Nachfrage zu decken und/oder beim Ausfall andere Erdgas-Netzanteile decken zu können.

Lokale Speicher sind nur dann nützlich, wenn sie rasch grössere Erdgasmengen liefern können.

Im Ausführungsbeispiel sind die Leitungen $9^{IV}$ and $33^{IV}$ an ein Pipeline-System angeschlossen. Die Anlage kann dann als reine Kompressions-Station benutzt werden, wenn Ventil 34 in Leitung $26^{IV}$, Ventil 37 in Leitung $8^{IV}$ und Ventil 35 in Leitung $7^{IV}$ geschlossen sind, und Erdgas aus der Leitung $33^{IV}$ bei geöffnetem Ventil 36 angesaugt wird und nach Verdichtung im Kompressor $2^{IV}$ durch Leitung $9^{IV}$ bei geöffnetem Ventil 38 ins Pipeline-System gefördert wird.

Die Anlage arbeitet als reine Verdampfungsanlage bei geschlossenem Ventil 36 und geöffneten Ventilen 34 und 35.

Es ist auch möglich, die Anlage gleichzeitig als Kompressionsstation und als Verdampfungsanlage zu betreiben. Die Leistungsanteile der beiden Operationen können sehr rasch geändert werden durch entsprechende Regelungen der Ventile 34 bis 38.

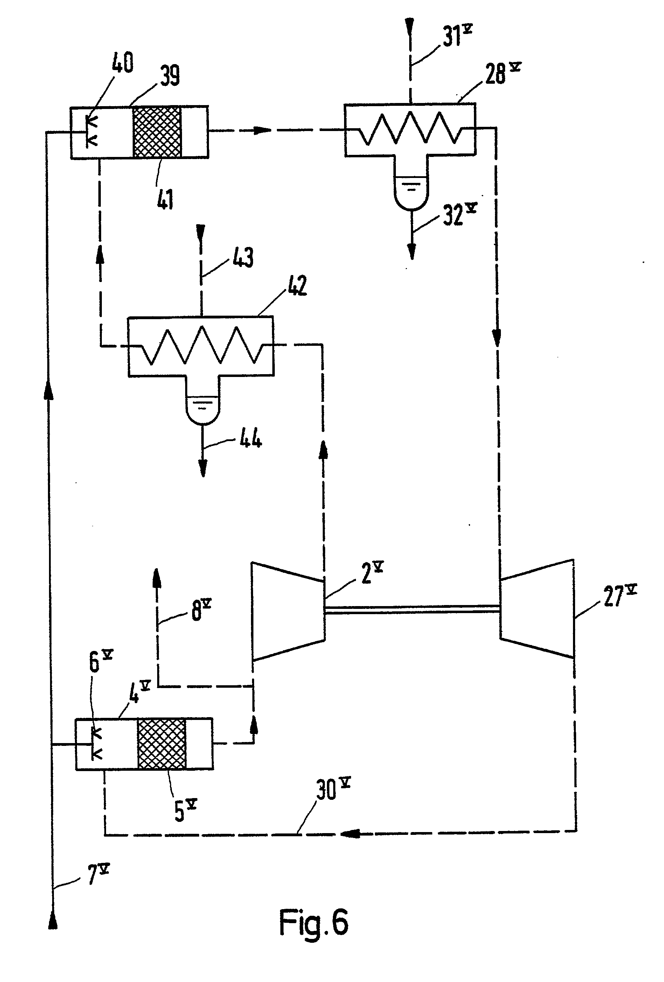

Die Fig. 6 zeigt eine vorteilhafte Weiterbildung einer Anlage gemäss Fig. 4. Die mit Fig. 4 übereinstimmenden Anlagenteile sind mit den gleichen Bezugsziffern bezeichnet und mit "V" versehen.

Im Anlagenteil mit tieferem Druck sind ein Kompressor $2^V$, eine Turbine $27^V$ und ein Behälter $4^V$ mit einem darin angeordneten statischen Mischer $5^V$ angeordnet. Der Anlagenteil mit dem höheren Druck weist Wärmeaustauscher 42 und $28^V$ sowie einen Behälter 39 mit einem statischen Mischer 4l auf.

Im Betrieb wird relativ warmes Erdgas nach Entspannung in der Turbine $27^V$ mit über Leitung $7^V$ durch Düsen $6^V$ in den Behälter $4^V$ eingespeistem Flüssig-Erdgas in Wärmeaustausch gebracht. Hierbei wird das Durchsatzverhältnis von Flüssig-Erdgas zu Erdgasdampf so gewählt, dass eine für die Lieferung des Produktes geeignete Temperatur erreicht wird, z.B. Umgebungstemperatur. Eine Teilmenge des Dampfes wird als Produkt aus der Leitung $8^V$ entnommen. Die übrige Dampfmenge wird im Kompressor $2^V$ verdichtet und im Wärmeaustauscher 42 erwärmt. Als Heizquelle kann z.B. Dampf, Abgas einer Gasturbine oder warmes Wasser verwendet werden, welches durch eine Leitung 43 in den Wärmeaustauscher 42 eingeleitet und nach Abkühlung durch eine Leitung 44 entnommen wird. Das im Wärmeaustauscher 42 erwärmte Gas wird sodann im Behälter 39 mit Flüssig-Erdgas, welches durch Düsen 40 eingesprüht wird, in der statischen Mischvorrichtung 4l gemischt. Die Mischtemperatur muss so hoch liegen, dass sich das Gemisch eindeutig als Gas verhält, d.h. dass keine Tropfenbildung entsteht. Es ist hierbei nicht erforderlich, dass die Umgebungstemperatur erreicht wird. Das Gemisch wird im Wärmeaustauscher $28^V$ weiter erwärmt und in der Turbine $27^V$ entspannt. Als Heizquelle Für den Wärmeaustauscher $28^V$ kann z.B. Dampf, Abgas einer Gasturbine oder warmes Wasser verwendet werden, welches durch eine Leitung $3l^V$ zu- und durch eine Leitung $32^V$ aus dem Wärmeaustauscher $28^V$ weggeführt wird.

Diese Ausführungsform einer erfindungsgemässen Anlage ermöglicht es, auch bei relativ kleinen Druckverhältnissen im Kompressor $2^v$ und in der Turbine $27^V$ (so dass einstufige Konstruktionen möglich sind), relativ gross Druckabfälle im Behälter 39 und in den Wärmeaustauschern 42 und $28^V$ zuzulassen. Hierdurch können Behälter und Wärmeaustauscher mit relativ kleiner Dimensionierung ausgebildet werden, was insbesondere bei Anwendung auf Schiffen vorteilhaft ist.

Die Erfindung umfasst alle möglichen Kombinationen der dargestellten Ausführungsbeispiele.

Nachstehend werden Zahlenbeispiele für Anlagen gemäss Fig. l, Fig. 2 und Fig. 4 für Erdgas-Betrieb angegeben.

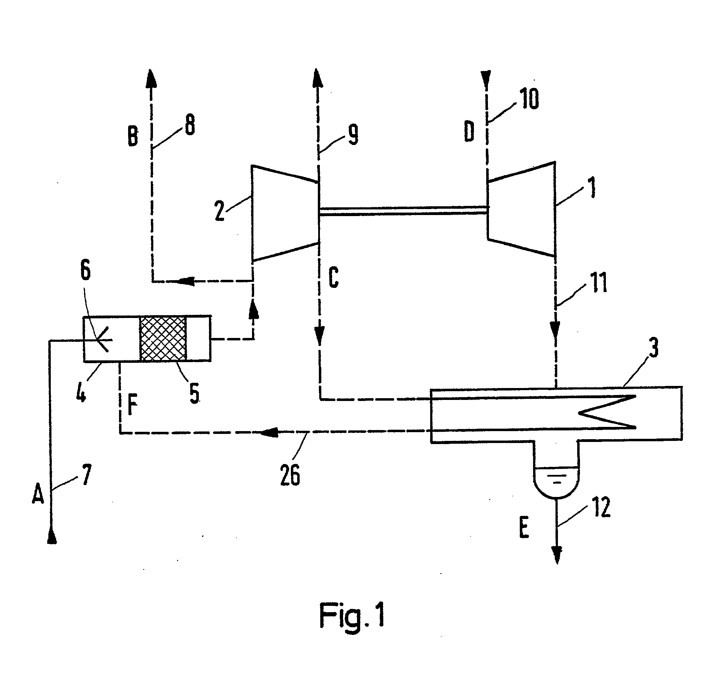

### Zahlenbeispiel für eine Anlage gemäss Fig. 1

|   | Temp. °C | Druck bar | Durchflussmenge t/d (Tonnen/Tag) |   |
|---|---|---|---|---|
| A | −156 | 80 | 3000 | Flüssiggas |
| B | 20 | 70 | 3000 | Gas |
| C | 34 | 82 | 9084 | Gas |
| D | 350 | 60 | 956 | Dampf |
| E | 144 | 4 | 956 | Dampf |
| F | 97 | 75 | 9084 | Gas |

**Zahlenbeispiel für eine Anlage gemäss Fig. 2**

|     | Temp. °C | Druck bar | Durchflussmenge t/d (Tonnen/Tag) |           |
| --- | --- | --- | --- | --- |
| A'  | −156 | 90 | 10000 | Flüssiggas |
| B'  | −156 | 90 | 5874 | Flüssiggas |
| C'  | −156 | 90 | 4126 | Flüssiggas |
| D'  | 20 | 80 | 10000 | Gas |
| E'  | 21 | 91 | 14662 | Gas |
| F'  | 127 | 88 | 14662 | Gas |
| G'  | 20 | 85 | 20536 | Gas |
| H'  | 127 | 82 | 10536 | Gas |
| I'  | 350 | 55 | 2300 | Dampf |
| J'  | 180 | 10 | 1338 | Kondensat |
| K'  | 180 | 10 | 962 | Dampf |
| L'  | 180 | 10 | 962 | Kondensat |

Das Zahlenbeispiel für eine Anlage gemäss Fig. 2 bezieht sich auf eine Sonderausführung, wobei Erdgasprodukt nur durch die Leitung 8' geliefert wird, und die Maschinen 2' und I' nicht vorhanden sind. Damit wird der Durchsatz G' in zwei Durchsätze D' und H' geteilt: D' wird als Produkt geliefert und H' wird in 3' aufgewärmt.

Nur die Turbine I4 wird mit Dampf gespeist, entsprechend J'. Ein Teil des Gegendruckdampfes, der am Austritt von I4 vorhanden ist, wird im Wärmeaustauscher I5 kondensiert (entsprechend der Durchsatz J'), und ein anderer Teil wird als Heizmittel dem Wärmeaustauscher 3' zugeführt (entsprechend K') und als Kondensat aus 3' abgeführt (entsprechend L').

**Zahlenbeispiel für eine Anlage gemäss Fig. 4**

|      | Temp. °C | Druck bar | Durchflussmenge t/d (Tonnen/Tag) |           |
| --- | --- | --- | --- | --- |
| A''' | −156 | 50 | 3000 | Flüssiggas |
| B''' | 20 | 35 | 3000 | Gas |
| C''' | 68,4 | 61,5 | 6077 | Gas |
| D''' | 276 | 60 | 1590 | Dampf |
| E''' | 276 | 60 | 1590 | Kondensat |
| F''' | 220 | 60 | 6077 | Gas |
| G''' | 176,6 | 36 | 6077 | Gas |

**Patentansprüche**

1. Verfahren zur Verdampfung von verflüssigten Kohlenwasserstoffen durch direkten Wärmeaustausch mit einem gasförmigen Kohlenwasserstoff-Strom, bei dem der gasförmige Kohlenwasserstoff-Strom durch indirekten Wärmeaustausch mit einem wärmeübertragenden Mittel so hoch erwärmt wird, dass bei dem anschliessenden direkten Wärmeaustausch mit dem verflüssigten Kohlenwasserstoff dieser verdampft, dadurch gekennzeichnet, dass der entstehende Dampf mindestens zu einem Teil in einem Kompressor (2) verdichtet wird, welcher von einer thermischen Maschine (1) angetrieben wird, und dass der gasförmige Kohlenwasserstoff-Strom (26) durch eine Teilmenge des Dampfes gebildet wird, wobei zur Erwärmung des Dampfes durch den indirekten Wärmeaustausch Abdampf bzw. Abgas der thermischen Maschine (1) verwendet wird.

2. Verfahren nach Anspruch 1, dadurch gekennzeichnet, dass als Produkt dampfförmiger Kohlenwasserstoff vor der Verdichtung entnommen wird.

3. Verfahren nach Anspruch 1, dadurch gekennzeichnet, dass als Produkt dampfförmiger Kohlenwasserstoff nach der Verdichtung entnommen wird.

4. Verfahren nach Anspruch 1, dadurch gekennzeichnet, dass der Kompressor (2) von einer Gegendruckturbine (1) angetrieben wird.

5. Verfahren nach Anspruch 1, dadurch gekennzeichnet, dass der Kompressor von einer Gasturbine angetrieben wird.

6. Verfahren nach Anspruch 1, dadurch gekennzeichnet, dass der Kompressor von einer Kolbenmaschine angetrieben wird.

7. Verfahren nach Anspruch 1, dadurch gekennzeichnet, dass der verflüssigte Kohlenwasserstoff und der erwärmte Kohlenwasserstoff mindestens einen statischen Mischer (5) durchströmen.

8. Verfahren nach Anspruch 1, dadurch gekennzeichnet, dass der verflüssigte Kohlenwasserstoff in mindestens zwei, in Serie angeordneten Stufen mit erwärmtem Kohlenwasserstoff in direkten Wärmeaustausch gebracht wird, wobei mindestens eine Stufe einen, von einer thermischen Maschine (1′) angetriebenen Kompressor (2′) aufweist.

9. Verfahren nach Anspruch 1, dadurch gekennzeichnet, dass der Kohlenwasserstoff-Strom vor seiner Erwärmung durch Wärmeaustausch mit dem Abdampf bzw. den Abgasen der thermischen Maschine (1″) mit dem Kondensat des Abdampfes bzw. den Abgasen nach Wärmeaustausch mit dem Kohlenwasserstoff-Strom vorgewärmt wird.

10. Verfahren nach Anspruch 1, dadurch gekennzeichnet, dass mindestens eine Teilmenge des verdichteten Dampfes durch indirekten Wärmeaustausch mit einem dampf- bzw. gasförmigen Medium erwärmt und sodann einer Turbine (27) zugeführt wird und darin entspannt wird, bevor er in direkten Wärmeaustausch mit verflüssigtem Kohlenwasserstoff gebracht wird.

11. Verfahren nach Anspruch 1, dadurch gekennzeichnet, dass der erwärmte Dampf vor seiner Einspeisung in die Turbine (27$^V$) zunächst mit einem weiteren Strom von verflüssigtem Kohlenwasserstoff in direkten Wärmeaustausch gebracht wird und dass weiterhin der entstehende Dampf durch indirekten Wärmeaustausch mit einem dampf- bzw. gasförmigen Medium erwärmt wird.

12. Anlage zur Durchführung des Verfahrens nach Anspruch 1, mit einem Wärmeaustauscher, in welchem von einem wärmeübertragenden Mittel Wärme durch indirekten Wärmeaustausch auf einen gasförmigen Kohlenwasserstoff-Strom übertragen wird und mit einem direkten Wärmeaustauscher, der eingangsseitig an eine Leitung für verflüssigten Kohlenwasserstoff sowie an eine Zuführleitung für den erwärmten gasförmigen Kohlenwasserstoff-Strom angeschlossen ist und ausgangsseitig mit einer Abführleitung für den in dem direkten Wärmeaustauscher entstehenden Dampf versehen ist, dadurch gekennzeichnet, dass die Abführleitung mit der Saugseite eines von einer thermischen Maschine (1) angetriebenen Kompressors (2) und dass der Ausgang des Kompressors (2) mit dem Wärmeaustauscher (3) verbunden ist.

13. Anlage nach Anspruch 12, in Kombination mit einem Erdgas-Pipeline-System, dadurch gekennzeichnet, dass zusätzlich an der Saugseite des Kompressors (2$^{IV}$) eine Zuleitung (33$^{IV}$) und an die Druckseite des Kompressors (2$^{IV}$) eine Ableitung (9$^{IV}$) des Pipeline-Systems angeschlossen ist.

## Claims

1. Process for vaporising liquefied hydrocarbons by direct heat exchange with a gaseous hydrocarbon stream, wherein the gaseous hydrocarbon stream is heated by indirect heat exchange with a heat-transfer medium to a point at which in the subsequent direct heat exchange with the liquefied hydrocarbon the latter vaporises, characterised in that at least part of the resulting vapour is compressed in a compressor (2), which is powered by a thermal machine (1), and that the gaseous hydrocarbon stream (26) is constituted by a proportion of the vapour, waste steam or waste gas from the therm machine (1) being used to heat the vapour by indirect heat exchange.

2. Process according to claim 1, characterised in that vaporous hydrocarbon is removed as product before compression.

3. Process according to claim 1, characterised in that vaporous hydrocarbon is removed as product after compression.

4. Process according to claim 1, characterised in that the compressor (2) is powered by a back-pressure turbine (1).

5. Process according to claim 1, characterised in that the compressor is powered by a gas turbine.

6. Process according to claim 1, characterised in that the compressor is powered by a reciprocating engine.

7. Process according to claim 1, characterised in that the liquefied hydrocarbon and the heated hydrocarbon flow through at least one static mixer (5).

8. Process according to claim 1, characterised in that the liquefied hydrocarbon is brought into direct heat exchange with heated hydrocarbon in at least two stages arranged in series, at least one of said stages having a compressor (2′) powered by a thermal machine (1).

9. Process according to claim 1, characterised in that prior to being heated by heat exchange with the waste steam or waste gases from the thermal machine (1″), the hydrocarbon stream is preheated with the condensate from the waste steam or waste gases after heat exchange with the hydrocarbon stream.

10. Process according to claim 1, characterised in that at least a proportion of the compressed vapour is heated by indirect heat exchange with a vaporous or gaseous medium and then fed to a turbine (27) and therein relaxed before being brought into direct heat exchange with liquefied hydrocarbon.

11. Process according to claim 1, characterised in that prior to being fed into the turbine (27$^V$), the heated vapour is first brought into direct heat exchange with an additional stream of liquefied hydrocarbon, and that furthermore the resulting vapour is heated by indirect heat exchange with a vaporous or gaseous medium.

12. Installation for carrying out the process according to claim 1, having a heat exchanger in which heat is transferred by indirect heat exchange from a heat-transfer medium to a gaseous hydrocarbon stream, and having a direct heat exchanger connected on the inlet side to a line for liquefied hydrocarbon and to a supply line for the heated gaseous hydrocarbon stream, and provided on the outlet side with a discharge line for the vapour produced in the direct heat exchanger, characterised in that the discharge line is connected to the suction side of a compressor (2) powered by a thermal machine (1), and that the outlet of the compressor (2) is connected to the heat exchanger (3).

13. Installation according to claim 12, in combination with a natural gas pipeline system, characterised in that in addition a supply line (33$^{IV}$) is connected on the suction side of the compressor (2$^{IV}$) and a take-off line (9$^{IV}$) of the pipeline system is connected on the pressure side of the compressor (2$^{IV}$).

## Revendication

1. Procédé d'évaporation d'hydrocarbures liquéfiés, par échange thermique direct avec un courant gazeux d'hydrocarbures, dans lequel le courant gazeux d'hydrocarbures est chauffé par échange indirect de chaleur avec un fluide caloporteur dans une mesure suffisante pour que, lors de l'échange thermique direct subséquent avec l'hydrocarbure liquéfié, ce dernier soit évaporé, caractérisé en ce que la vapeur produite est comprimée au moins en partie dans un compresseur (2) qui est entraîné par une machine thermique (1), et en ce que le courant d'hydrocarbure gazeux (26) est formé d'une partie de la vapeur, et on utilise alors pour réchauffer la vapeur par échange thermique indirect, de la vapeur ou du gaz d'échappement de la machine thermique (1).

2. Procédé suivant la revendication 1, caractérisé en ce que de l'hydrocarbure sous forme de vapeur est prélevé comme produit avant la compression.

3. Procédé suivant la revendication 1, caractérisé en ce que de l'hydrocarbure sous forme de vapeur est prélevé comme produit après la compression.

4. Procédé suivant la revendication 1, caractérisé en ce que le compresseur (2) est entraîné par une turbine à contre-pression (1).

5. Procédé suivant la revendication 1, caractérisé en ce que le compresseur est entraîné par une turbine à gaz.

6. Procédé suivant la revendication 1, caractérisé en ce que le compresseur est entraîné par une machine à piston.

7. Procédé suivant la revendication 1, caractérisé en ce que l'hydrocarbure liquéfié et l'hydrocarbure réchauffé passent dans au moins un mélangeur statique (5).

8. Procédé suivant la revendication 1, caractérisé en ce que l'hydrocarbure liquéfié est mis en relation d'échange thermique direct avec l'hydrocarbure réchauffé dans au moins deux étages disposés en série, dont l'un au moins présente un compresseur (2') entraîné par une machine thermique (1').

9. Procédé suivant la revendication 1, caractérisé en ce que le courant d'hydrocarbure est préchauffé avant son réchauffement par échange de chaleur avec la vapeur d'échappement ou les gaz d'échappement de la machine thermique (1"), avec le condensat de la vapeur d'échappement ou les gaz d'échappement après échange de chaleur avec le courant d'hydrocarbure.

10. Procédé suivant la revendication 1, caractérisé en ce qu'au moins une partie de la vapeur comprimée est réchauffée par échange thermique indirect avec un fluide à l'état de vapeur ou de gaz puis amenée à une turbine (27) et détendue dans cette turbine avant d'entrer en contact direct d'échange de chaleur avec l'hydrocarbure liquéfié.

11. Procédé suivant la revendication 1, caractérisé en ce que la vapeur réchauffée est mise en relation d'échange direct de chaleur avant son injection dans la turbine (27$^V$), tout d'abord avec un autre courant d'hydrocarbure liquéfié, et en ce que la vapeur produite est en outre réchauffée par échange thermique indirect avec un fluide sous forme de vapeur ou de gaz.

12. Installation pour la mise en œuvre du procédé suivant la revendication 1, comportant un échangeur de chaleur dans lequel de la chaleur est transférée d'un fluide caloporteur par échange thermique indirect à un courant d'hydrocarbure gazeux, et un autre échangeur direct de chaleur qui est raccordé du côté de l'entrée à une conduite à hydrocarbure liquéfié ainsi qu'à une conduite d'amenée du courant d'hydrocarbure gazeux réchauffé et est muni, du côté de la sortie, d'un conduit d'évacuation de la vapeur produite dans l'échangeur direct de chaleur, caractérisée en ce que la conduite d'évacuation est reliée au côté d'aspiration d'un compresseur (2) entraîné par une machine thermique (1) et en ce que la sortie du compresseur (2) est reliée avec l'échangeur de chaleur (3).

13. Installation suivant la revendication 12, en association avec un gazoduc à gaz naturel, caractérisée en outre en ce qu'une conduite d'arrivée (33$^{IV}$) est raccordée au côté aspiration du compresseur (2$^{IV}$) et une conduit de départ (9$^{IV}$) du gazoduc est raccordée au côté refoulement du compresseur (2$^{IV}$).

Fig. 1

EP 0 237 942 B1

Fig. 2

Fig. 3

Fig. 4

Fig. 5

Fig.6